# EUROPEAN PATENT SPECIFICATION

(11) **EP 4 279 387 B1**
(45) Date of publication and mention of the grant of the patent: **12.03.2025**
(21) Application number: 23171368.6
(22) Date of filing: 03.05.2023
(51) Int. Cl.: B64D 13/06, B64D 37/30, B64D 37/34, F02C 7/224

(54) **HYDROGEN-COOLED ENVIRONMENTAL CONTROL SYSTEM**
WASSERSTOFFGEKÜHLTES KLIMATISIERUNGSSYSTEMSYSTEM
SYSTÈME DE RÉGULATION ENVIRONNEMENTAL REFROIDI À L'HYDROGÈNE

(30) Priority: 17.05.2022 US 202217746535
(43) Date of publication of application: 22.11.2023
(73) Proprietor: Hamilton Sundstrand Corporation, Charlotte, NC 28217-4578 (US)
(72) Inventor: VEILLEUX Jr., Leo J., Wethersfield, CT, 06109 (US); RIBAROV, Lubomir A., West Hartford, CT, 06107 (US)
(74) Representative: Dehns

(56) References cited:
- CN-A- 105 620 760
- US-A1- 2007 101 731
- US-A1- 2007 113 579
- US-B1- 6 776 002

## Description

### BACKGROUND

The following description relates to environmental control systems (ECSs) and, more specifically, to an integrated hydrogen-cooled ECS.

Consistent with modern advanced more electric aircraft/more electric engine (MEA/MEE) architectures, an integrated ECS can use electrically driven cabin air compressors to compress incoming ram air that enters the aircraft fuselage through opening scoops. This avoids wasteful bleeding of hot pressurized engine compressed air while improving overall thermodynamic performance. The pressurized warmed ram air is monitored with pressure sensors and temperature sensors. It flows through an ozone (O3) converter before it is flown to heat exchangers for cooling. A modulating deflector flap can be used to modulate the amount of ram air incoming to the inlet of each air compressor.

The use of dedicated heat exchangers for ECS can add weight while limiting available space for other needed equipment.

What is needed is a way to further integrate an ECS into modern MEA/MEE architecture. This is especially true for those cases where power is provided by on-board hydrogen.

The prior art is illustrated by document CN 105 620 760 A.

### BRIEF DESCRIPTION

According to an aspect of the disclosure, a hydrogen-cooled environmental control system (ECS) is provided and includes a pressurizing system including an electric compressor that compresses RAM air into pressurized warm RAM air for a cabin and a heat exchanger in which the pressurized warm RAM air is selectively cooled by hydrogen flown from a hydrogen fuel tank toward a combustor in accordance with conditions of the pressurized warm RAM air prior to the pressurized warm RAM air reaching the cabin.

In accordance with additional or alternative embodiments, the cabin is an aircraft cabin of an aircraft, the pressurizing system is provided as first and second pressurizing systems for each side of the aircraft and the heat exchanger is provided as first and second heat exchangers for each side of the aircraft.

In accordance with additional or alternative embodiments, the pressurizing system further includes a RAM air inlet including a controllable deflector flap, pressure and temperature sensors upstream and downstream from the electric compressor and an ozone converter interposed between the electric compressor and the heat exchanger.

In accordance with additional or alternative embodiments, the pressurizing system further includes an electric heat load heat exchanger interposed between the heat exchanger and the cabin and pressurized cooled RAM air from the heat exchanger is selectively used for cooling an electric heat load in the electric heat load heat exchanger in accordance with conditions of the pressurized cooled RAM air and the electric heat load.

In accordance with additional or alternative embodiments, the hydrogen-cooled ECS further includes a bypass line by which hydrogen flown from the hydrogen fuel tank toward the combustor bypasses the heat exchanger and a valve which is controllable to adjust an amount of the hydrogen that is permitted to flow along the bypass line.

In accordance with additional or alternative embodiments, the hydrogen-cooled ECS further includes a fuel control valve upstream from the combustor to control an amount of the hydrogen that is permitted to flow into the combustor.

In accordance with additional or alternative embodiments, the hydrogen-cooled ECS further includes a fuel cell in parallel with the combustor and a valve which is controllable to direct a first portion of the hydrogen toward the combustor and a second portion of the hydrogen toward the fuel cell.

In accordance with additional or alternative embodiments, the hydrogen-cooled ECS further includes an internal hydrogen leak sensor disposed within the heat exchanger to detect an internal hydrogen leak thereof, an external hydrogen leak sensor disposed at an exterior of the heat exchanger to detect an external hydrogen leak and a system to cut off a flow of the hydrogen into the heat exchanger in an event of the internal hydrogen leak and to cease the flow of the hydrogen in an event of the external hydrogen leak.

According to an aspect of the disclosure, a method of operating a hydrogen-cooled environmental control system (ECS) is provided and includes providing a pressurizing system including an electric compressor that compresses RAM air into pressurized warm RAM air for a cabin and selectively cooling the pressurized warm RAM air in a heat exchanger with hydrogen flown from a hydrogen fuel tank to a combustor in accordance with conditions of the pressurized warm RAM air prior to the pressurized warm RAM air reaching the cabin.

In accordance with additional or alternative embodiments, the cabin is an aircraft cabin of an aircraft, the pressurizing system is provided as first and second pressurizing systems for each side of the aircraft and the heat exchanger is provided as first and second heat exchangers for each side of the aircraft.

In accordance with additional or alternative embodiments, the method further includes selectively using pressurized cooled RAM air from the heat exchanger for cooling an electric heat load in accordance with conditions of the pressurized cooled RAM air and the electric heat load.

In accordance with additional or alternative embodiments, the method further includes at least one of controllably bypassing a flow of the hydrogen around the heat exchanger, controlling an amount of the hydrogen that is permitted to flow into the combustor, cutting off a flow of the hydrogen into the heat exchanger in an event of a leak within the heat exchanger and ceasing the flow of the hydrogen in an event of a leak at an exterior of the heat exchanger.

According to an aspect of the disclosure, hydrogen-cooled environmental control system (ECS) is provided and includes a bleed air system providing pressurized warm bleed air for a cabin, a pressurizing system in parallel with the bleed air system and comprising an electric compressor that compresses RAM air into pressurized warm RAM air for the cabin and a heat exchanger in which at least one of the pressurized warm bleed air and the pressurized warm RAM air is selectively cooled by hydrogen flown from at least one hydrogen fuel tank toward at least one combustor in accordance with respective conditions of the pressurized warm bleed air and the pressurized warm RAM air prior to the pressurized warm bleed air and the pressurized warm RAM air reaching the cabin.

In accordance with additional or alternative embodiments, the cabin is an aircraft cabin of an aircraft, the bleed air system is provided as first and second bleed air systems for each side of the aircraft, the pressurizing system is provided as first and second pressurizing systems for each side of the aircraft and the heat exchanger is provided as first and second heat exchangers for each side of the aircraft.

In accordance with additional or alternative embodiments, the pressurizing system further includes a RAM air inlet including a controllable deflector flap, pressure and temperature sensors upstream and downstream from the electric compressor and an ozone converter interposed between the electric compressor and the heat exchanger.

In accordance with additional or alternative embodiments, the pressurizing system further includes an electric heat load heat exchanger interposed between the heat exchanger and the cabin and pressurized cooled RAM air from the heat exchanger is selectively used for cooling an electric heat load in the electric heat load heat exchanger in accordance with conditions of the pressurized cooled RAM air and the electric heat load.

In accordance with additional or alternative embodiments, the hydrogen-cooled ECS further includes a bypass line by which hydrogen flown from the at least one hydrogen fuel tank toward the at least one combustor bypasses the heat exchanger and a valve which is controllable to adjust an amount of the hydrogen that is permitted to flow along the bypass line.

In accordance with additional or alternative embodiments, the hydrogen-cooled ECS further includes a fuel control valve upstream from the at least one combustor to control an amount of the hydrogen that is permitted to flow into the at least one combustor.

In accordance with additional or alternative embodiments, the hydrogen-cooled ECS further includes a fuel cell in parallel with the at least one combustor and a valve which is controllable to direct a first portion of the hydrogen toward the at least one combustor and a second portion of the hydrogen toward the fuel cell.

In accordance with additional or alternative embodiments, the hydrogen-cooled ECS further includes an internal hydrogen leak sensor disposed within the heat exchanger to detect an internal hydrogen leak thereof, an external hydrogen leak sensor disposed at an exterior of the heat exchanger to detect an external hydrogen leak and a system to cut off a flow of the hydrogen into the heat exchanger in an event of the internal hydrogen leak and to cease the flow of the hydrogen in an event of the external hydrogen leak.

These and other advantages and features will become more apparent from the following description taken in conjunction with the drawings.

### BRIEF DESCRIPTION OF THE DRAWINGS

The subject matter, which is regarded as the disclosure, is particularly pointed out and distinctly claimed in the claims at the conclusion of the specification. The foregoing and other features and advantages of the disclosure are apparent from the following detailed description taken in conjunction with the accompanying drawings in which:
FIG. 1 is a top-down view of an aircraft in which an ECS is deployed in accordance with embodiments;
FIG. 2 is a schematic illustration of an ECS of the aircraft of FIG. 1 in accordance with embodiments;
FIG. 3 is a schematic diagram of heat exchangers of the ECS of FIG. 2 in accordance with embodiments;
FIG. 4 is a flow diagram illustrating a method of operating an ECS in accordance with embodiments; and
FIG. 5 is a schematic illustration of an ECS of the aircraft of FIG. 1 in accordance with further embodiments.

These and other advantages and features will become more apparent from the following description taken in conjunction with the drawings.

### DETAILED DESCRIPTION

As will be described below, an ECS is integrated into modern MEA/MEE architecture, especially where power is provided by on-board hydrogen. On-board stored compressed liquefied hydrogen (H2) is used both as fuel (i.e., propellant) for a combustor as well as coolant media for pressurized warmed ram air to be used for the ECS and for cabin pressurization. In addition, the cold H2 can be used as a heat sink for various on-board heat loads. Such loads can be, but are not limited to, lubrication systems, hydraulic system, pneumatic system, various electric waste heat loads, etc.

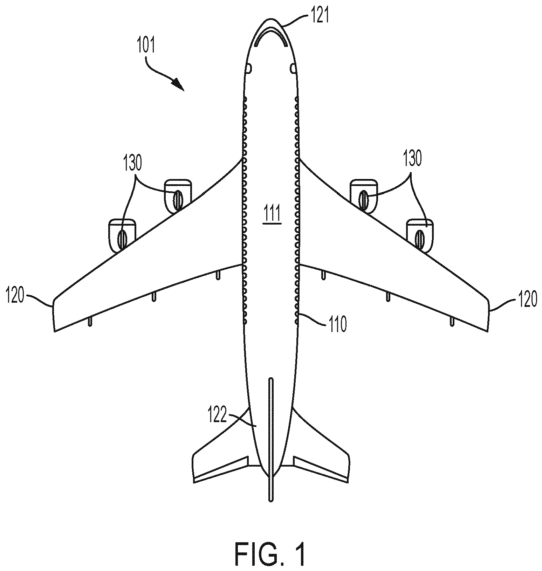

With reference to FIG. 1, an aircraft 101 is provided and includes a fuselage 110 which is formed to define a cabin 111 or an aircraft cabin in an interior thereof, aerodynamic features such as wings 120 that extend outwardly from the fuselage 110, a nose 121 at a forward end of the fuselage 110 and a tail section 122 at a rear end of the fuselage 110. The aircraft 101 further includes at least one engine 130 at either side of the aircraft 101 that generates power for flight and for other on-board powered features.

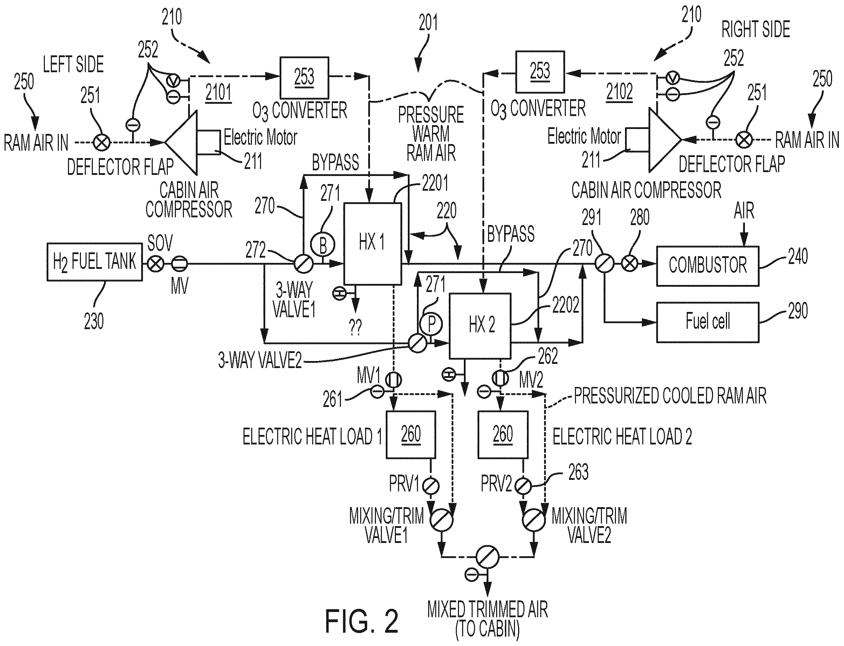

With reference to FIG. 2, a hydrogen-cooled ECS 201 is provided for use with each side of the aircraft 101 of FIG. 1. The hydrogen-cooled ECS 201 includes a pressurizing system 210 that can be provided as a first pressurizing system 2101 on a first side of the aircraft 101 and a second pressurizing system 2102 on a second side of the aircraft 101. Each of the first pressurizing system 2101 and the second pressurizing system 2102 includes an electric compressor 211 that compresses RAM air into pressurized warm RAM air for the cabin 111 of FIG. 1. The hydrogen-cooled ECS 201 further includes a heat exchanger 220 that can be provided as a first heat exchanger 2201 on the first side of the aircraft 101 and a second heat exchanger 2202 on the second side of the aircraft 101.

Prior to the pressurized warm RAM air reaching the cabin 111, the pressurized warm RAM air is selectively cooled in each of the first heat exchanger 2201 and the second heat exchanger 2202 by hydrogen (i.e., cold, liquid hydrogen) that is flown from a hydrogen fuel tank 230 toward a combustor 240, which is configured to generate power for the at least one engine 130 (see FIG. 1). The selective cooling of the pressurized warm air is executable in accordance with conditions of the pressurized warm RAM air, such as a pressure and a temperature of the pressurized warm air.

The following description will provide descriptions of additional features of the hydrogen-cooled ECS 201 of FIG. 2. Unless otherwise noted, these descriptions will refer to components of the hydrogen-cooled ECS 201 in the singular and it will be understood that they can each be provided on both sides of the aircraft 101. This is done for clarity and brevity and should not be interpreted as limiting the description or the claims in any way.

The pressurizing system 210 (i.e., each of the first pressurizing system 2101 and the second pressurizing system 2102) further includes a RAM air inlet 250 that includes a controllable deflector flap 251, which is controllable to adjust an amount of RAM air that is permitted to enter into the RAM air inlet 250, pressure and temperature sensors 252 operably disposed upstream and downstream from the electric compressor 211 to sense and thus determine the conditions of the pressurized warm RAM air and an ozone converter 253. The ozone converter 253 is operably interposed between the electric compressor 211 and the heat exchanger 220 (i.e., the first heat exchanger 2201 and the second heat exchanger 2202) to remove ozone from the pressurize warm RAM air.

The pressurizing system 210 (i.e., each of the first pressurizing system 2101 and the second pressurizing system 2102) further includes an electric heat load heat exchanger 260, additional sensors 261, a metering valve 262 and a pressure relief valve 263. The electric heat load heat exchanger 260 is operably interposed between the heat exchanger 220 (i.e., the first heat exchanger 2201 and the second heat exchanger 2202) and the cabin 111 (see FIG. 1). The additional sensors 261 can include temperature sensors to sense a temperature of pressurized cooled RAM air leaving the heat exchanger 220. The metering valve 262 can be controlled in accordance with the readings of the additional sensors 261 to adjust an amount of the pressurized cooled RAM air that is permitted to leave the heat exchanger 220. Within the electric heat load heat exchanger 260, pressurized cooled RAM air from the heat exchanger 220 is selectively used for cooling an electric heat load in accordance with conditions of the pressurized cooled RAM air, as sensed by the additional sensors 261, and the electric heat load. The pressure relief valve 263 is operably disposed to prevent a pressure within the electric heat load heat exchanger 260 from exceeding a predefined limit.

The pressurizing system 210 (i.e., each of the first pressurizing system 2101 and the second pressurizing system 2102) further includes a bypass line 270 by which hydrogen flown from the hydrogen fuel tank 230 toward the combustor 240 bypasses the heat exchanger 220 (i.e., the first heat exchanger 2201 and the second heat exchanger 2202), additional sensors 271 to sense a temperature and/or a pressure of the hydrogen, and a valve 272, such as a three-way valve. The valve 272 is controllable in accordance with readings of the additional sensor 271 to adjust an amount of the hydrogen that is permitted to flow along the bypass line 270.

The hydrogen-cooled ECS 201 can further include a fuel control valve 280. The fuel control valve 280 is operably disposed upstream from the combustor 240 to control an amount of the hydrogen that is permitted to flow into the combustor 240.

The hydrogen-cooled ECS 201 can further include a fuel cell 290, which is disposed in parallel with the combustor 240, and a valve 291. The fuel cell 290 can be provided as a hydrogen-based fuel cell and can be configured to generate electric power for the aircraft 101 (see FIG. 1). The valve 291 is operably disposed upstream from the combustor 240 and the fuel cell 290 and is controllable to direct a first portion of the hydrogen toward the combustor 240 and a second portion of the hydrogen toward the fuel cell 290.

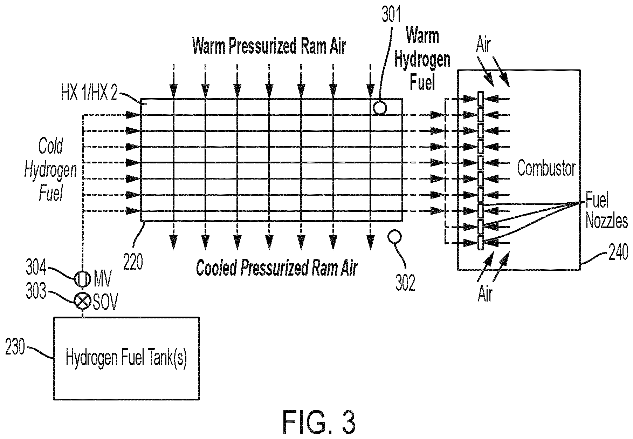

With reference to FIG. 3, the heat exchanger 220 (i.e., the first heat exchanger 2201 and the second heat exchanger 2202) is receptive of cold hydrogen fuel from the hydrogen fuel tank 230. This cold hydrogen fuel removes heat from the warm pressurized RAM air as the cold hydrogen fuel and the warm pressurized RAM air move through the heat exchanger 220. Subsequently, warm hydrogen fuel exits the heat exchanger 220 and proceeds to the combustor 240 while the cooled pressurized RAM air proceeds to the cabin 111 (see FIG. 1).

As shown in FIG. 3, the hydrogen-cooled ECS 201 can further include an internal hydrogen leak sensor 301, which is disposed within the heat exchanger 220 to detect an internal hydrogen leak thereof, an external hydrogen leak sensor 302, which is disposed at an exterior of the heat exchanger 220 to detect an external hydrogen leak, and a system of controllable valves (i.e., the valve 272 of FIG. 2, a shut-off valve 303 and a metering valve 304). The system of controllable valves can be configured to cut off a flow of the hydrogen into the heat exchanger 220 in an event of the internal hydrogen leak sensed by the internal hydrogen leak sensor 301 and to cease the flow of the hydrogen from the hydrogen fuel tank 230 in an event of the external hydrogen leak sensed by the external hydrogen leak sensor 302.

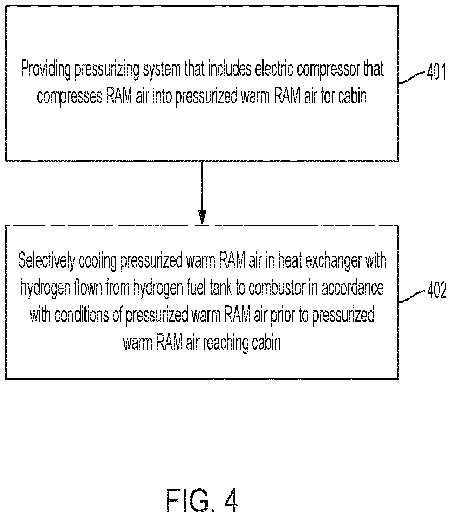

With reference to FIG. 4, a method of operating a hydrogen-cooled ECS, such as the hydrogen-cooled ECS 201 described above, is provided. The method includes providing a pressurizing system that includes an electric compressor that compresses RAM air into pressurized warm RAM air for a cabin (block 401) and selectively cooling the pressurized warm RAM air in a heat exchanger with hydrogen flown from a hydrogen fuel tank to a combustor in accordance with conditions of the pressurized warm RAM air prior to the pressurized warm RAM air reaching the cabin (block 402). As above, the cabin can be an aircraft cabin of an aircraft, the pressurizing system can be provided as first and second pressurizing systems for each side of the aircraft and the heat exchanger can be provided as first and second heat exchangers for each side of the aircraft.

The method can further include selectively using pressurized cooled RAM air from the heat exchanger for cooling an electric heat load in accordance with conditions of the pressurized cooled RAM air and the electric heat load and at least one of controllably bypassing a flow of the hydrogen around the heat exchanger, controlling an amount of the hydrogen that is permitted to flow into the combustor, cutting off a flow of the hydrogen into the heat exchanger in an event of a leak within the heat exchanger and ceasing the flow of the hydrogen in an event of a leak at an exterior of the heat exchanger.

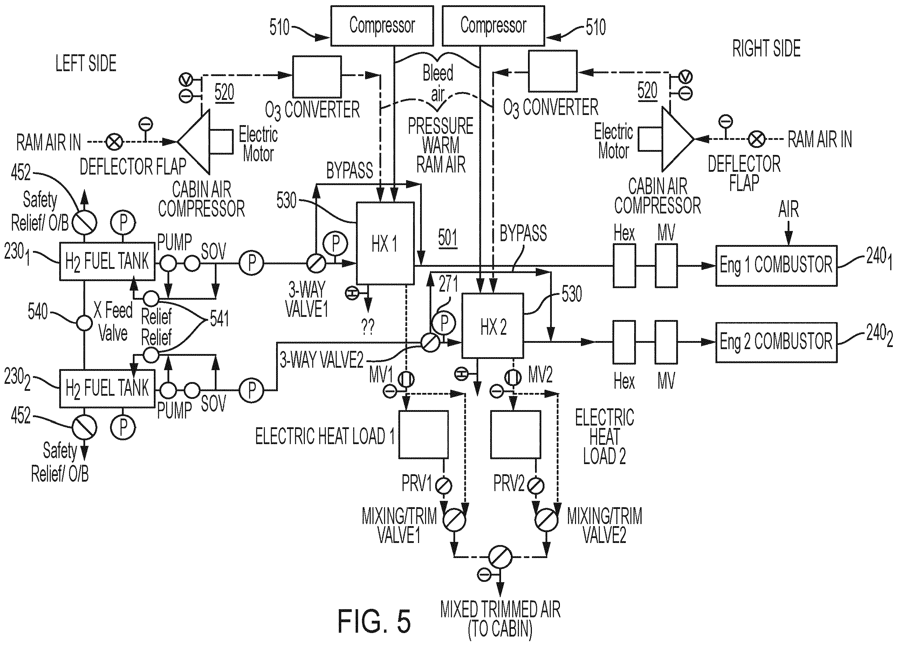

With reference to FIG. 5, a hydrogen-cooled ECS 501 is provided and is generally similar to the hydrogen-cooled ECS of FIGS. 1-3 except that the hydrogen-cooled ECS 501 includes a bleed air system 510, a pressurizing system 520 and a heat exchanger 530. The bleed air system 510 provides pressurized warm bleed air for cabin 111 from a compressor of the at least one engine 130 (see FIG. 1). The pressurizing system 520 is provided in parallel with the bleed air system 510 and is otherwise similar to the pressurizing system 210 of FIG. 2. At least one of the pressurized warm bleed air and the pressurized warm RAM air is selectively cooled within the heat exchanger 530 by hydrogen flown from the hydrogen fuel tank 230 toward the combustor 240 in accordance with respective conditions of the pressurized warm bleed air and the pressurized warm RAM air prior to the pressurized warm bleed air and the pressurized warm RAM air reaching the cabin 111 (see FIG. 1).

FIG. 5 also illustrates that the hydrogen-cooled ECS 501 can include multiple combustors (i.e., engine 1 combustor 240₁ and engine 2 combustor 240₂) and that the hydrogen fuel tank 230 can be provided as first and second hydrogen fuel tanks 230₁ and 230₂ where hydrogen fuel tank 230₁ fuels the engine 1 combustor 240₁ via a pump, a solenoid valve, a heat exchanger and a metering valve and the hydrogen fuel tank 230₂ fuels the engine 2 combustor 240₂ via a pump, a solenoid valve, a heat exchanger and a metering valve. In these or other cases, the first and second hydrogen fuel tanks 230₁ and 230₂ can be coupled via feed valve 540 and each can be provided with multiple safety/relief valves 541 and 542.

It is to be understood that the various features described above with reference to FIG. 5 can be included in at least the embodiments of FIG. 2 and vice versa. For example, the fuel cell 290 of FIG. 2 can be provided as multiple fuel cells that are respectively disposed in parallel with engine 1 combustor 240₁ and with engine 2 combustor 240₂.

Technical effects and benefits of the present disclosure are the utilization of H2 as both fuel and coolant for various on-board waste heat loads. Heated vaporized H2 fuel "keeps" (i.e., absorbs) waste heat and transfers it during combustion processes, thus improving overall thermodynamic cycle of the system. The present disclosure also provides for the use of H2 as a coolant sink for pressurized warm ram air (for ECS), utilization of avionics waste heat for warming up of pressurized cooled ram air (for ECS), the use of double-walled buffer geometry for the H2 flow inside the hydrogen-to-air heat exchangers, safety detection H2 molecule sensors for accidental H2 leak inside either heat exchanger (HX1/HX2) with a bypass for H2 around heat exchangers, a simple and lightweight and robust integrated ECS and an integrated control system that is fully integrated with on-board aircraft computers and electronic engine controllers (EECs) to fully optimize thermal management system performance.

While the disclosure is provided in detail in connection with only a limited number of embodiments, it should be readily understood that the disclosure is not limited to such disclosed embodiments. Accordingly, the disclosure is not to be seen as limited by the foregoing description, but is only limited by the scope of the appended claims.

## Claims

1. A hydrogen-cooled environmental control system, ECS, comprising:
a pressurizing system (210) comprising an electric compressor (211) that compresses RAM air into pressurized warm RAM air for a cabin (111); and
a heat exchanger (220) in which the pressurized warm RAM air is selectively cooled by hydrogen flown from a hydrogen fuel tank (230) toward a combustor (240) in accordance with conditions of the pressurized warm RAM air prior to the pressurized warm RAM air reaching the cabin (111).

2. The hydrogen-cooled ECS according to claim 1, wherein:
the cabin (111) is an aircraft cabin of an aircraft,
the pressurizing system (210) is provided as first and second pressurizing systems (2101, 2102) for each side of the aircraft, and
the heat exchanger (220) is provided as first and second heat exchangers (2201, 2202) for each side of the aircraft.

3. The hydrogen-cooled ECS according to claim 1 or 2, wherein the pressurizing system (210) further comprises:
a RAM air inlet (250) comprising a controllable deflector flap;
pressure and temperature sensors (252) upstream and downstream from the electric compressor; and
an ozone converter (253) interposed between the electric compressor and the heat exchanger.

4. The hydrogen-cooled EC according to any preceding claim, wherein:
the pressurizing system (210) further comprises an electric heat load heat exchanger (260) interposed between the heat exchanger and the cabin, and
pressurized cooled RAM air from the heat exchanger (220) is selectively used for cooling an electric heat load in the electric heat load heat exchanger (260) in accordance with conditions of the pressurized cooled RAM air and the electric heat load.

5. The hydrogen-cooled ECS according to any preceding claim , further comprising:
a bypass line (270) by which hydrogen flown from the hydrogen fuel tank (230) toward the combustor (240) bypasses the heat exchanger (220); and
a valve (272) which is controllable to adjust an amount of the hydrogen that is permitted to flow along the bypass line (270).

6. The hydrogen-cooled ECS according to any preceding claim, further comprising a fuel control valve (280) upstream from the combustor (240) to control an amount of the hydrogen that is permitted to flow into the combustor.

7. The hydrogen-cooled ECS according to any preceding claim, further comprising:
a fuel cell (290) in parallel with the combustor (240); and
a valve (291) which is controllable to direct a first portion of the hydrogen toward the combustor (240) and a second portion of the hydrogen toward the fuel cell (290).

8. The hydrogen-cooled ECS according to any preceding claim, further comprising:
an internal hydrogen leak sensor (301) disposed within the heat exchanger (220) to detect an internal hydrogen leak thereof;
an external hydrogen leak sensor (302) disposed at an exterior of the heat exchanger (220) to detect an external hydrogen leak; and
a system to cut off a flow of the hydrogen into the heat exchanger (220) in an event of the internal hydrogen leak and to cease the flow of the hydrogen in an event of the external hydrogen leak.

9. A method of operating a hydrogen-cooled environmental control system, ECS, the method comprising:
providing a pressurizing system comprising an electric compressor that compresses RAM air into pressurized warm RAM air for a cabin; and
selectively cooling the pressurized warm RAM air in a heat exchanger with hydrogen flown from a hydrogen fuel tank to a combustor in accordance with conditions of the pressurized warm RAM air prior to the pressurized warm RAM air reaching the cabin.

10. The method according to claim 9, wherein:
the cabin is an aircraft cabin of an aircraft,
the pressurizing system is provided as first and second pressurizing systems for each side of the aircraft, and
the heat exchanger is provided as first and second heat exchangers for each side of the aircraft.

11. The method according to claim 9 or 10, further comprising selectively using pressurized cooled RAM air from the heat exchanger for cooling an electric heat load in accordance with conditions of the pressurized cooled RAM air and the electric heat load.

12. The method according to any of claims 9-11, further comprising at least one of:
controllably bypassing a flow of the hydrogen around the heat exchanger;
controlling an amount of the hydrogen that is permitted to flow into the combustor;
cutting off a flow of the hydrogen into the heat exchanger in an event of a leak within the heat exchanger; and
ceasing the flow of the hydrogen in an event of a leak at an exterior of the heat exchanger.

13. A hydrogen-cooled environmental control system, ECS, comprising:
a bleed air system (510) providing pressurized warm bleed air for a cabin (111);
a pressurizing system (520) in parallel with the bleed air system (510) and comprising an electric compressor that compresses RAM air into pressurized warm RAM air for the cabin; and
a heat exchanger (530) in which at least one of the pressurized warm bleed air and the pressurized warm RAM air is selectively cooled by hydrogen flown from at least one hydrogen fuel tank (230) toward at least one combustor in accordance with respective conditions of the pressurized warm bleed air and the pressurized warm RAM air prior to the pressurized warm bleed air and the pressurized warm RAM air reaching the cabin.

14. The hydrogen-cooled ECS according to claim 13, wherein:
the cabin is an aircraft cabin of an aircraft,
the bleed air system (510) is provided as first and second bleed air systems for each side of the aircraft;
the pressurizing system (520) is provided as first and second pressurizing systems for each side of the aircraft, and
the heat exchanger is provided as first and second heat exchangers for each side of the aircraft.

15. The hydrogen-cooled ECS according to claim 13 or 14, wherein the pressurizing system (520) further comprises:
a RAM air inlet comprising a controllable deflector flap;
pressure and temperature sensors upstream and downstream from the electric compressor; and
an ozone converter interposed between the electric compressor and the heat exchanger; and/or wherein:
the pressurizing system further comprises an electric heat load heat exchanger interposed between the heat exchanger and the cabin, and
pressurized cooled RAM air from the heat exchanger is selectively used for cooling an electric heat load in the electric heat load heat exchanger in accordance with conditions of the pressurized cooled RAM air and the electric heat load; and/or further comprising:
a bypass line by which hydrogen flown from the at least one hydrogen fuel tank toward the at least one combustor bypasses the heat exchanger; and
a valve which is controllable to adjust an amount of the hydrogen that is permitted to flow along the bypass line; and/or further comprising a fuel control valve upstream from the at least one combustor to control an amount of the hydrogen that is permitted to flow into the at least one combustor; and/or further comprising:
a fuel cell in parallel with the at least one combustor; and
a valve which is controllable to direct a first portion of the hydrogen toward the at least one combustor and a second portion of the hydrogen toward the fuel cell; and/or further comprising:
an internal hydrogen leak sensor disposed within the heat exchanger to detect an internal hydrogen leak thereof;
an external hydrogen leak sensor disposed at an exterior of the heat exchanger to detect an external hydrogen leak; and
a system to cut off a flow of the hydrogen into the heat exchanger in an event of the internal hydrogen leak and to cease the flow of the hydrogen in an event of the external hydrogen leak.

## Patentansprüche

1. Wasserstoffgekühltes Klimatisierungssteuerungssystem (environmental control system, ECS), umfassend:
ein Drucksystem (210), umfassend einen elektrischen Verdichter (211), der RAM-Luft in unter Druck stehende warme RAM-Luft für eine Kabine (111) verdichtet; und
einen Wärmetauscher (220), in dem die unter Druck stehende warme RAM-Luft wahlweise durch Wasserstoff gekühlt wird, der aus einem Wasserstoff-Kraftstofftank (230) in Richtung einer Brennkammer (240) strömt, gemäß den Bedingungen der unter Druck stehenden warmen RAM-Luft bevor die unter Druck stehende warme RAM-Luft die Kabine (111) erreicht.

2. Wasserstoffgekühltes ECS nach Anspruch 1, wobei:
die Kabine (111) eine Luftfahrzeugkabine eines Luftfahrzeugs ist,
das Drucksystem (210) als erstes und zweites Drucksystem (2101, 2102) für jede Seite des Luftfahrzeugs bereitgestellt wird und der Wärmetauscher (220) als erster und zweiter Wärmetauscher (2201, 2202) für jede Seite des Luftfahrzeugs bereitgestellt wird.

3. Wasserstoffgekühltes ECS nach Anspruch 1 oder 2, wobei das Drucksystem (210) ferner Folgendes umfasst:
einen RAM-Einlass (250), umfassend eine steuerbare Ablenkklappe;
Druck- und Temperatursensoren (252) stromaufwärts und stromabwärts von dem elektrischen Verdichter; und
einen Ozonkonverter (253), der zwischen dem elektrischen Verdichter und dem Wärmetauscher zwischengeschaltet ist.

4. Wasserstoffgekühltes EC nach einem der vorhergehenden Ansprüche, wobei:
das Drucksystem (210) ferner einen elektrischen Wärmebelastungs-Wärmetauscher (260) umfasst, der zwischen dem Wärmetauscher und der Kabine zwischengeschaltet ist, und
unter Druck stehende gekühlte RAM-Luft aus dem Wärmetauscher (220) selektiv zum Kühlen einer elektrischen Wärmebelastung in dem elektrischen Wärmebelastungs-Wärmetauscher (260) gemäß den Bedingungen der unter Druck stehenden gekühlten RAM-Luft und der elektrischen Wärmebelastung verwendet wird.

5. Wasserstoffgekühltes ECS nach einem der vorhergehenden Ansprüche, ferner umfassend:
eine Bypass-Leitung (270), durch die Wasserstoff, der aus dem Wasserstofftank (230) in Richtung der Brennkammer (240) strömt, den Wärmetauscher (220) umgeht; und
ein Ventil (272), das steuerbar ist, um eine Menge des Wasserstoffs anzupassen, die entlang der Bypass-Leitung (270) strömen darf.

6. Wasserstoffgekühltes ECS nach einem der vorhergehenden Ansprüche, ferner umfassend ein stromaufwärts von der Brennkammer (240) angeordnetes Kraftstoffsteuerventil (280) zum Steuern einer Menge an Wasserstoff, die in die Brennkammer strömen darf.

7. Wasserstoffgekühltes ECS nach einem der vorhergehenden Ansprüche, ferner umfassend:
eine Brennstoffzelle (290) parallel mit der Brennkammer (240); und
ein Ventil (291), das steuerbar ist, um einen ersten Abschnitt des Wasserstoffs in Richtung der Brennkammer (240) und einen zweiten Abschnitt des Wasserstoffs in Richtung der Brennstoffzelle (290) zu richten.

8. Wasserstoffgekühltes ECS nach einem der vorhergehenden Ansprüche, ferner umfassend:
einen internen Wasserstofflecksensor (301), der innerhalb des Wärmetauschers (220) angeordnet ist, um ein internes Wasserstoffleck davon zu detektieren;
einen externen Wasserstofflecksensor (302), der an einer Außenseite des Wärmetauschers (220) angeordnet ist, um ein externes Wasserstoffleck zu detektieren; und
ein System, um einen Strom des Wasserstoffs in den Wärmetauscher (220) im Falle eines internen Wasserstofflecks zu unterbrechen und den Strom des Wasserstoffs im Falle eines externen Wasserstofflecks zu stoppen.

9. Verfahren zum Betreiben eines wasserstoffgekühlten Klimatisierungssteuerungssystems, ECS, wobei das Verfahren Folgendes umfasst:
Bereitstellen eines Drucksystems, umfassend einen elektrischen Verdichter, der RAM-Luft in unter Druck stehende warme RAM-Luft für eine Kabine verdichtet; und
selektives Kühlen der unter Druck stehenden warmen RAM-Luft in einem Wärmetauscher mit Wasserstoff, der aus einem Wasserstofftank zu einer Brennkammer strömt, gemäß den Bedingungen der unter Druck stehenden warmen RAM-Luft bevor die unter Druck stehende warme RAM-Luft die Kabine erreicht.

10. Verfahren nach Anspruch 9, wobei:
die Kabine eine Luftfahrzeugkabine eines Luftfahrzeugs ist,
das Drucksystem als erstes und zweites Drucksystem für jede Seite des Luftfahrzeugs bereitgestellt wird und
der Wärmetauscher als erster und zweiter Wärmetauscher für jede Seite des Luftfahrzeugs bereitgestellt wird.

11. Verfahren nach Anspruch 9 oder 10, ferner umfassend selektives Verwenden von unter Druck stehender gekühlter RAM-Luft aus dem Wärmetauscher zum Kühlen einer elektrischen Wärmebelastung gemäß den Bedingungen der unter Druck stehenden gekühlten RAM-Luft und der elektrischen Wärmebelastung.

12. Verfahren nach einem der Ansprüche 9-11, ferner umfassend mindestens eines von Folgendem:
gesteuertes Umgehen eines Stroms von Wasserstoff um den Wärmetauscher herum;
Steuern einer Menge an Wasserstoff, die in die Brennkammer strömen darf;
Unterbrechen des Stroms des Wasserstoffs in den Wärmetauscher im Falle eines Lecks innerhalb des Wärmetauschers; und
Stoppen des Stroms des Wasserstoffs im Falle eines Lecks an der Außenseite des Wärmetauschers.

13. Wasserstoffgekühltes Klimatisierungssteuerungssystem, ECS, umfassend:
ein Zapfluftsystem (510), das unter Druck stehende warme Zapfluft für eine Kabine (111) bereitstellt;
ein Drucksystem (520), das parallel mit dem Zapfluftsystem (510) verläuft, und umfassend einen elektrischen Verdichter, der RAM-Luft in unter Druck stehende warme RAM-Luft für die Kabine verdichtet; und
einen Wärmetauscher (530), in dem mindestens eine der unter Druck stehenden warmen Zapfluft und der unter Druck stehenden warmen RAM-Luft selektiv durch Wasserstoff gekühlt wird, der von mindestens einem Wasserstoff-Kraftstofftank (230) zu mindestens einer Brennkammer strömt, gemäß den jeweiligen Bedingungen der unter Druck stehenden warmen Zapfluft und der unter Druck stehenden warmen RAM-Luft bevor die unter Druck stehende warme Zapfluft und die unter Druck stehende warme RAM-Luft die Kabine erreichen.

14. Wasserstoffgekühltes ECS nach Anspruch 13, wobei:
die Kabine eine Luftfahrzeugkabine eines Luftfahrzeugs ist,
das Zapfluftsystem (510) als erstes und zweites Zapfluftsystem für jede Seite des Luftfahrzeugs bereitgestellt wird;
das Drucksystem (520) als erstes und zweites Drucksystem für jede Seite des Luftfahrzeugs bereitgestellt wird und
der Wärmetauscher als erster und zweiter Wärmetauscher für jede Seite des Luftfahrzeugs bereitgestellt wird.

15. Wasserstoffgekühltes ECS nach Anspruch 13 oder 14, wobei das Drucksystem (520) ferner Folgendes umfasst:
einen RAM-Einlass, umfassend eine steuerbare Ablenkklappe;
Druck- und Temperatursensoren stromaufwärts und stromabwärts von dem elektrischen Verdichter; und
ein Ozonkonverter, der zwischen dem elektrischen Verdichter und dem Wärmetauscher zwischengeschaltet ist; und/oder wobei:
das Drucksystem ferner einen elektrischen Wärmebelastungs-Wärmetauscher umfasst, der zwischen dem Wärmetauscher und der Kabine zwischengeschaltet ist, und
unter Druck stehende gekühlte RAM-Luft aus dem Wärmetauscher selektiv zum Kühlen einer elektrischen Wärmebelastung in dem elektrischen Wärmebelastungs-Wärmetauscher gemäß den Bedingungen der unter Druck stehenden gekühlten RAM-Luft und der elektrischen Wärmebelastung verwendet wird; und/oder ferner umfassend:
eine Bypass-Leitung, durch die Wasserstoff, der aus dem mindestens einen Wasserstofftank in Richtung der mindestens einen Brennkammer strömt, den Wärmetauscher umgeht; und
ein Ventil, das steuerbar ist, um eine Menge an Wasserstoff anzupassen, die entlang der Bypass-Leitung strömen darf;
und/oder ferner umfassend ein Kraftstoffsteuerventil stromaufwärts von der mindestens einen Brennkammer, um eine Menge an Wasserstoff zu steuern, die in die mindestens eine Brennkammer strömen darf; und/oder ferner umfassend:
eine Brennstoffzelle parallel mit der mindestens einen Brennkammer; und
ein Ventil, das steuerbar ist, um einen ersten Abschnitt des Wasserstoffs in Richtung der mindestens einen Brennkammer und einen zweiten Abschnitt des Wasserstoffs in Richtung der Brennstoffzelle zu richten; und/oder ferner umfassend:
einen internen Wasserstofflecksensor, der innerhalb des Wärmetauschers angeordnet ist, um ein internes Wasserstoffleck davon zu detektieren;
einen externen Wasserstofflecksensor, der an einer Außenseite des Wärmetauschers angeordnet ist, um ein externes Wasserstoffleck zu detektieren; und
ein System, um einen Strom des Wasserstoffs in den Wärmetauscher im Falle eines internen Wasserstofflecks zu unterbrechen und den Strom des Wasserstoffs im Falle eines externen Wasserstofflecks zu stoppen.

## Revendications

1. Système de contrôle environnemental refroidi à l'hydrogène, ECS, comprenant :
un système de pressurisation (210) comprenant un compresseur électrique (211) qui comprime l'air RAM en air RAM chaud sous pression pour une cabine (111) ; et
un échangeur de chaleur (220) dans lequel l'air RAM chaud sous pression est refroidi de manière sélective par de l'hydrogène circulant depuis un réservoir de carburant à hydrogène (230) vers une chambre de combustion (240) conformément aux conditions de l'air RAM chaud sous pression avant que l'air RAM chaud sous pression n'atteigne la cabine (111).

2. ECS refroidi à l'hydrogène selon la revendication 1, dans lequel :
la cabine (111) est une cabine d'aéronef d'un aéronef,
le système de pressurisation (210) est prévu sous forme de premier et second systèmes de pressurisation (2101, 2102) pour chaque côté de l'aéronef, et
l'échangeur de chaleur (220) est prévu comme premier et second échangeurs de chaleur (2201, 2202) pour chaque côté de l'aéronef.

3. ECS refroidi à l'hydrogène selon la revendication 1 ou 2, dans lequel le système de pressurisation (210) comprend également :
une entrée d'air RAM (250) comprenant un volet déflecteur contrôlable ;
des capteurs de pression et de température (252) en amont et en aval du compresseur électrique ; et
un convertisseur d'ozone (253) interposé entre le compresseur électrique et l'échangeur de chaleur.

4. EC refroidi à l'hydrogène selon une quelconque revendication précédente, dans lequel :
le système de pressurisation (210) comprend également un échangeur de chaleur à charge thermique électrique (260) interposé entre l'échangeur de chaleur et la cabine, et
l'air RAM refroidi sous pression provenant de l'échangeur de chaleur (220) est utilisé de manière sélective pour refroidir une charge thermique électrique dans l'échangeur de chaleur de charge thermique électrique (260) en fonction des conditions de l'air RAM refroidi sous pression et de la charge thermique électrique.

5. ECS refroidi à l'hydrogène selon une quelconque revendication précédente, comprenant également :
une conduite de dérivation (270) par laquelle l'hydrogène circulant depuis le réservoir de carburant à hydrogène (230) vers la chambre de combustion (240) contourne l'échangeur de chaleur (220) ; et
une soupape (272) qui peut être contrôlée pour ajuster une quantité d'hydrogène qui est autorisée à s'écouler le long de la conduite de dérivation (270).

6. ECS refroidi à l'hydrogène selon une quelconque revendication précédente, comprenant également une soupape de régulation de carburant (280) en amont de la chambre de combustion (240) pour réguler une quantité d'hydrogène qui est autorisée à s'écouler dans la chambre de combustion.

7. ECS refroidi à l'hydrogène selon une quelconque revendication précédente, comprenant également :
une pile à combustible (290) en parallèle avec la chambre de combustion (240) ; et
une soupape (291) qui peut être commandée pour diriger une première partie de l'hydrogène vers la chambre de combustion (240) et une seconde partie de l'hydrogène vers la pile à combustible (290).

8. ECS refroidi à l'hydrogène selon une quelconque revendication précédente, comprenant également :
un capteur de fuite d'hydrogène interne (301) disposé à l'intérieur de l'échangeur de chaleur (220) pour détecter une fuite d'hydrogène interne de celui-ci ;
un capteur de fuite d'hydrogène externe (302) disposé à l'extérieur de l'échangeur de chaleur (220) pour détecter une fuite d'hydrogène externe ; et
un système permettant de couper le flux d'hydrogène dans l'échangeur de chaleur (220) en cas de fuite d'hydrogène interne et de cesser le flux d'hydrogène en cas de fuite d'hydrogène externe.

9. Procédé de fonctionnement d'un système de contrôle environnemental refroidi à l'hydrogène, ECS, le procédé comprenant :
fourniture d'un système de pressurisation comprenant un compresseur électrique qui comprime l'air RAM en air RAM chaud sous pression pour une cabine ; et
refroidissement de manière sélective de l'air RAM chaud sous pression dans un échangeur de chaleur avec de l'hydrogène circulant depuis un réservoir de carburant à hydrogène à une chambre de combustion conformément aux conditions de l'air RAM chaud sous pression avant que l'air RAM chaud sous pression n'atteigne la cabine.

10. Procédé selon la revendication 9, dans lequel :
la cabine est une cabine d'aéronef d'un aéronef,
le système de pressurisation est fourni sous forme de premier et second systèmes de pressurisation pour chaque côté de l'aéronef, et
l'échangeur de chaleur est fourni comme premier et second échangeurs de chaleur pour chaque côté de l'aéronef.

11. Procédé selon la revendication 9 ou 10, comprenant également l'utilisation sélective d'air RAM refroidi sous pression provenant de l'échangeur de chaleur pour refroidir une charge thermique électrique en fonction des conditions de l'air RAM refroidi sous pression et de la charge thermique électrique.

12. Procédé selon l'une quelconque des revendications 9 à 11, comprenant également au moins l'un des éléments suivants :
la dérivation contrôlable d'un flux d'hydrogène autour de l'échangeur de chaleur ;
le contrôle de la quantité d'hydrogène qui est autorisée à s'écouler dans la chambre de combustion ;
l'interruption du flux d'hydrogène dans l'échangeur de chaleur en cas de fuite dans l'échangeur de chaleur ; et
l'arrêt du flux d'hydrogène en cas de fuite à l'extérieur de l'échangeur de chaleur.

13. Système de contrôle environnemental refroidi à l'hydrogène, ECS, comprenant :
un système de prélèvement d'air (510) fournissant de l'air de prélèvement chaud sous pression pour une cabine (111) ;
un système de pressurisation (520) en parallèle avec le système de prélèvement d'air (510) et comprenant un compresseur électrique qui comprime l'air RAM en air RAM chaud sous pression pour la cabine ; et
un échangeur de chaleur (530) dans lequel au moins l'un de l'air de prélèvement chaud sous pression et de l'air RAM chaud sous pression est refroidi de manière sélective par de l'hydrogène circulant depuis au moins un réservoir de carburant à hydrogène (230) vers au moins une chambre de combustion conformément aux conditions respectives de l'air de prélèvement chaud sous pression et de l'air RAM chaud sous pression avant que l'air de prélèvement chaud sous pression et l'air RAM chaud sous pression n'atteignent la cabine.

14. ECS refroidi à l'hydrogène selon la revendication 13, dans lequel :
la cabine est une cabine d'aéronef d'un aéronef,
le système de prélèvement d'air (510) est prévu comme premier et second systèmes de prélèvement d'air pour chaque côté de l'aéronef ;
le système de pressurisation (520) est fourni sous forme de premier et second systèmes de pressurisation pour chaque côté de l'aéronef, et
l'échangeur de chaleur est fourni comme premier et second échangeurs de chaleur pour chaque côté de l'aéronef.

15. ECS refroidi à l'hydrogène selon la revendication 13 ou 14, dans lequel le système de pressurisation (520) comprend également :
une entrée d'air RAM comprenant un volet déflecteur contrôlable ;
des capteurs de pression et de température en amont et en aval du compresseur électrique ; et
un convertisseur d'ozone interposé entre le compresseur électrique et l'échangeur de chaleur ; et/ou dans lequel :
le système de pressurisation comprend également un échangeur de chaleur à charge thermique électrique interposé entre l'échangeur de chaleur et la cabine, et
l'air RAM refroidi sous pression provenant de l'échangeur de chaleur est utilisé de manière sélective pour refroidir une charge thermique électrique dans l'échangeur de chaleur de charge thermique électrique en fonction des conditions de l'air RAM refroidi sous pression et de la charge thermique électrique ; et/ou comprend également :
une conduite de dérivation par laquelle l'hydrogène circulant depuis l'au moins un réservoir de carburant à hydrogène vers l'au moins un brûleurs contourne l'échangeur de chaleur ; et
une soupape qui peut être commandée pour ajuster une quantité d'hydrogène qui est autorisée à s'écouler le long de la conduite de dérivation ; et/ou comprenant également une soupape de régulation de carburant en amont d'au moins une chambre de combustion pour contrôler une quantité d'hydrogène qui est autorisée à s'écouler dans l'au moins une chambre de combustion ; et/ou comprenant également :
une pile à combustible en parallèle avec au moins une chambre de combustion ; et
une soupape qui peut être commandée pour diriger une première partie de l'hydrogène vers l'au moins un brûleur et une seconde partie de l'hydrogène vers la pile à combustible ; et/ou comprenant également :
un capteur de fuite d'hydrogène interne disposé à l'intérieur de l'échangeur de chaleur pour détecter une fuite d'hydrogène interne de celui-ci ;
un capteur de fuite d'hydrogène externe disposé à l'extérieur de l'échangeur de chaleur pour détecter une fuite d'hydrogène externe ; et
un système permettant de couper le flux d'hydrogène dans l'échangeur de chaleur en cas de fuite d'hydrogène interne et de cesser le flux d'hydrogène en cas de fuite d'hydrogène externe.
